# EUROPEAN PATENT SPECIFICATION

(11) **EP 2 412 054 B1**
(45) Date of publication and mention of the grant of the patent: **07.10.2015**
(21) Application number: 10714959.3
(22) Date of filing: 22.03.2010
(51) Int. Cl.: H01M 2/10, H01M 10/613, H01M 10/647, H01M 10/6557, H01M 10/6563, H01M 10/615

(54) **TEMPERATURE ADJUSTMENT STRUCTURE OF ELECTRICITY STORAGE APPARATUS**
TEMPERATURREGELUNGSSTRUKTUR FÜR EIN STROMSPEICHERGERÄT
STRUCTURE DE RÉGULATION THERMIQUE D'UN APPAREIL DE STOCKAGE D'ÉLECTRICITÉ

(30) Priority: 23.03.2009 JP 2009069465
(43) Date of publication of application: 01.02.2012
(73) Proprietor: TOYOTA JIDOSHA KABUSHIKI KAISHA, Toyota-shi, Aichi-ken, 471-8571 (JP)
(72) Inventor: MIZUGUCHI, Makoto, Aichi-ken 471-8571 (JP)
(74) Representative: TBK
(86) International application number: PCT/IB2010/000631
(87) International publication number: WO 2010/109293

(56) References cited:
- EP-A1- 1 207 581
- WO-A1-02/27816
- WO-A1-2007/046588
- WO-A2-01/75989
- JP-A- 6 001 150
- JP-A- 2002 313 440
- US-A1- 2002 102 454
- US-A1- 2010 021 810

## Description

### BACKGROUND OF THE INVENTION

### 1. Field of the Invention

The invention relates to a temperature adjustment structure that adjusts the temperature of an electricity storage apparatus in which a plurality of electricity storage elements are aligned in one direction.

### 2. Description of the Related Art

The secondary cell may become heated due to charging/discharging thereof, or the like, and the electric cell characteristic thereof (in other words, the input/output characteristic thereof) may degrade according to the temperature rise of the secondary cell. To overcome this drawback, some secondary cells are constructed so as to restrain the temperature rise thereof by supplying cooling air to the secondary cell. A reference document for this technology is, for example, Japanese Patent Application Publication No. 2007-188715 (JP-A-2007-188715).

To cool a cell module (battery assembly) constructed of a plurality of electric cells (secondary cells), cooling air is supplied to each one of the electric cells.

In a construction of a cell module, a plurality of electric cells (i.e., so-called rectangular electric cells) are arranged in a direction. In this construction of the cell module, heat dissipation characteristic varies according to the position in the direction of arrangement of the electric cells. Concretely, heat dissipation may be less in a central portion of the cell module in the arrangement direction of the electric cells than in the end portions of the cell module in the arrangement direction, so that the temperature of the central portion of the cell module may become higher than the temperature of the end portions thereof.

In the foregoing construction, even if cooling air is supplied substantially uniformly to the electric cells that constitute the cell module, temperature is likely to vary among the electric cells.

Furthermore, an electric storage apparatus according to the preamble of claim 1 is known from WO 02/27816 A1.

### SUMMARY OF THE INVENTION

It is the object of the present invention to provide an electricity storage apparatus that is capable of restraining the variation of the temperature distribution among a plurality of electricity storage elements.

According to present invention, the above object is solved with an electric storage apparatus having the features of claim 1.

In the electric storage apparatus, the gas for adjusting temperature may be, for example, air. Besides, in the foregoing aspect, the main flowing direction of the gas passing through the second region may be opposite from the main direction of the gas passing through the first region. Due to this construction, the gas can smoothly flow in the first region and the second region.

In the electric storage apparatus, the first region may have lower heat dissipation characteristic than the second region. Preferably, the first region may be located in a central portion of the electricity storage apparatus in a plane that extends in the predetermined direction along an upper surface of the electricity storage apparatus, and the second region may be located toward an outside edge side of the electricity storage apparatus from the first region in the plane.

Furthermore, the first region may be near a heat source, and the second region may be remoter from the heat source in a plane that extends in the predetermined direction along an upper surface of the electricity storage apparatus than the first region is from the heat source.

Moreover, the temperature adjustment structure may further include a third passageway that is provided in a third region in the electricity storage apparatus which is adjacent to the second region, and that causes the gas having passed through the second region to pass, in a direction that is different from the flowing direction of the gas within the second region, through the third region. In this construction, the third region may have higher heat dissipation characteristic than the first region and the second region, and may include an external surface of the electricity storage apparatus. If the electricity storage apparatus is divided into an increased number of regions (the first to third regions) as in this construction, restraining the temperature variation among the electricity storage elements that constitute the electricity storage apparatus will become easier. Besides, in the foregoing construction, the flowing direction of the gas passing through the third region may be the same as the flowing direction of the gas passing through the first region.

The temperature adjustment apparatus according to the foregoing construction may further include a partition plate that is located in an outer surface of the electricity storage apparatus and that separates the second region and the third region.

The temperature adjustment apparatus according to the foregoing construction may further include a first spacer that extends from an upper end surface to a lower end surface of the electricity storage apparatus and that separates the second region and the third region.

Furthermore, the temperature adjustment apparatus may further include a partition plate that is located in an outer surface of the electricity storage apparatus and that separates the first region and the second region.

Furthermore, the temperature adjustment structure may further include a second spacer that extends from an upper end surface to a lower end surface of the electricity storage apparatus and that separates the first region and the second region.

According to the invention, the states of the gas caused to pass through the first region and the second region can be made different from each other according to the temperature characteristics of the first region and the second region in the electricity storage apparatus. For example, in an environment in which the first region is likely to have higher temperature than the second region, the temperature-adjusting gas may be first supplied to the first region, and the gas having been subjected to the heat exchange in the first region is supplied to the second region. By constructing the temperature adjustment apparatus in this manner, the temperature variation among a plurality of electricity storage elements that constitute an electricity storage apparatus can be restrained.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is an external view showing a construction of a battery in a first embodiment of the invention;
FIG. 2 is an external view showing a temperature adjustment structure according to the first embodiment;
FIG. 3 is an external view showing a structure of a bottom surface of a battery case in a modification of the first embodiment;
FIG. 4 is a plan view of a temperature adjustment structure according to another modification of the first embodiment from the above;
FIG. 5 is a plan view showing a temperature adjustment structure according to a second embodiment of the invention;
FIG. 6 is a sectional view taken on line A-A in FIG. 5; and
FIG. 7 is a sectional view taken on line B-B in FIG. 5.

### DETAILED DESCRIPTION OF EMBODIMENTS

Hereinafter, embodiments of the invention will be described.

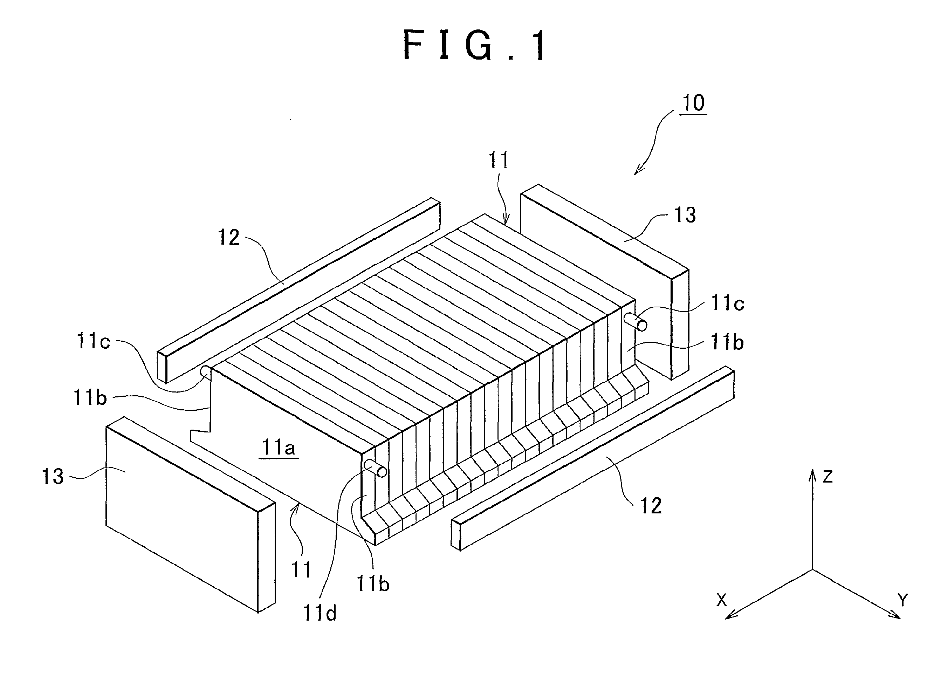

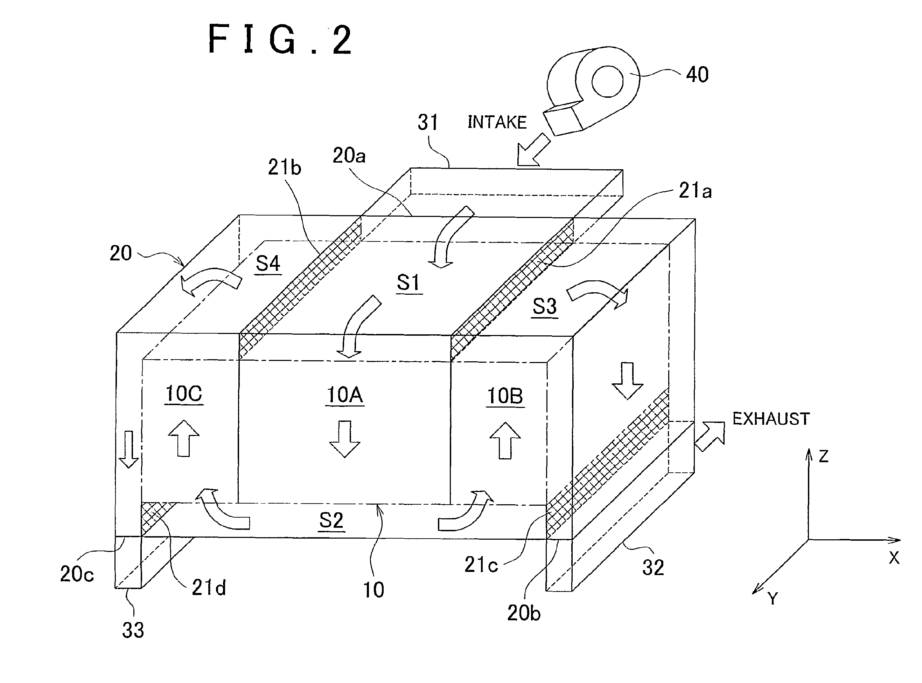

A temperature adjustment structure of a battery (electricity storage apparatus) according to a first embodiment of the invention will be described with reference to FIG. 1 and FIG. 2. FIG. 1 is a perspective view showing a construction of a battery, and FIG. 2 is a perspective view showing a temperature adjustment structure. In FIGS. 1 and 2, the X-axis, the Y-axis and the Z-axis are orthogonal to one another, and in this embodiment, the Z-axis is defined as an axis that corresponds to the vertical direction.

Firstly, the construction of the battery in this embodiment will be described with reference to FIG. 1. The battery 10 of this embodiment is mounted in a vehicle that is, for example, a hybrid motor vehicle, an electric motor vehicle, etc. In this embodiment, the hybrid motor vehicle represents a vehicle that uses the battery 10 as well as an internal combustion engine and a fuel cell as a motive power source that outputs energy for use for the traveling of the vehicle. Besides, the electric motor vehicle in this embodiment represents a vehicle that uses only the battery 10 as a motive power source of the vehicle.

Electric power output from the battery 10 is supplied to an electric motor that in turn generates kinetic energy that is to be used for the traveling of the vehicle. Besides, during braking of the vehicle, regenerative electric power that is generated by the motor can be stored into the battery 10. Furthermore, the battery 10 can be charged by supplying electric power thereto from outside the vehicle.

The battery 10 has a plurality of cell modules (electricity storage elements) 11 that are disposed side by side in the direction of the X-axis (direction X). Within each cell module 11, a plurality of electric cells (not shown) are disposed side by side in the direction of the Y-axis (direction Y), and are electrically connected to each other in series. Although in this embodiment, the electric cells are nickel hydride cells, this the electric cells are not restrictive, and other types of secondary cells, such as lithium-ion cells and the like, may also be used as the electric cells. Besides, electric double-layer capacitors may also be used instead of the secondary cells. Furthermore, although in this embodiment, the cell modules 11 each having a plurality of electric cells are juxtaposed in the direction X, adopting a construction in which electric cells are disposed as electricity storage elements according to this invention, side by side in the direction X, is also possible.

Each cell module 11 has first side surfaces 11 a and second side surfaces 11b. The first side surfaces 11a form surfaces (along a Y-Z plane) that are orthogonal to the direction in which the cell modules 11 are arranged, and each cell module 11 has two first side surfaces 11a. The second side surfaces 11b form surfaces (along an X-Z plane) parallel to the arrangement direction of the cell modules 11, and each cell module 11 has two second side surfaces 11b. The first side surfaces 11a of each cell module 11 face the first side surfaces 11a of adjacent cell modules 11 in the direction X. A space for flowing air is formed between adjacent first side surfaces 11a that face each other, as described below. Concretely, a spacer (not shown) for forming the foregoing space is disposed between cell modules 11 that are adjacent to each other in the direction X.

Besides, the two second side surfaces 11b of each cell module 11 are provided with a positive terminal 11c and a negative terminal 11d, respectively. It is to be noted that in FIG. 1, positive terminals 11c and negative terminals 11d of the cell modules 11 of the battery 10 are omitted excluding the two end-located cell modules 11.

Two bus bar modules 12 are disposed to face each of the second side surface 11b of the cell modules 11. Each bus bar module 12 electrically connects the positive terminal 11c of one of every two cell modules 11 disposed adjacent to each other and the negative terminal 11d of the other one of the two adjacent cell modules 11. The cell modules 11 that constitute the battery 10 are electrically interconnected in series. Incidentally, each bus bar module 12 has a plurality of bus bars for electrically connecting positive terminals 11 c and negative terminals 11d.

A pair of end plates 13 are disposed at such positions as to sandwich the cell modules 11. Constraining rods (not shown) extending in the direction X are connected to the two end plates 13. By connecting the two ends of each constraining rods to the two end plates 13, constraining force can be given to the cell modules 11. This constraining force serves as a force that causes cell modules 11 disposed adjacent to each other in the direction X to be closer to each other.

Incidentally, although in this embodiment, two constraining rods are disposed on each of the upper surface side and the lower surface side of the cell modules 11, the number of constraining rods provided may be set as appropriate. Besides, the structure that gives the foregoing constraining force to the plurality of cell modules 11 is not limited to the structure described above in conjunction with the embodiment, but may be any structure as long as the structure provides a constraining force as described above. Furthermore, the structure that give such a constraining force to the cell modules 11 may also be omitted.

Next, the temperature adjustment structure of this embodiment will be described with reference to FIG. 2. Blank arrows in FIG. 2 show directions of airflow.

The battery 10 is constructed of a first cell block 10A that is positioned at the center in the direction X, and a second cell block 10B and a third cell block 10C that are disposed at the two opposite sides of the first cell block 10A in the direction X. Each of the cell blocks 10A to 10C is constructed of a plurality of cell modules 11. The number of cell modules 11 that constitute the second cell block 10B is equal to the number of cell modules 11 that constitute the third cell block 10C. Besides, the number of cell modules 11 that constitute the first cell block 10A is greater than the number of cell modules 11 that constitute the second cell block 10B (or the third cell block 10C).

Incidentally, the number of cell modules 11 that constitute each cell block 10A to 10C may be set as appropriate. For example, the numbers of cell modules 11 that constitute the cell blocks 10A to 10C may be made equal to each other, or may also be made different from each other. Concretely, it suffices that the cell modules 11 that constitute the battery 10 are divided into three cell blocks 10A to 10C, taking into account the heat dissipation characteristics of the cell modules 11, or the like.

The battery 10 is covered by a battery case 20. A connection opening 20a is formed on a side surface of an upper portion of the battery case 20. An end of an air intake duct 31 is connected to the connection opening 20a, and an opening portion (air intake opening) formed on another end of the air intake duct 31 faces the internal space of a cabin of the vehicle. Therefore, air in the cabin can be taken into the air intake duct 31. The cabin herein refers to a space in which occupants of the vehicle sit or stay. Besides, the air intake duct 31 is provided with a fan 40. As the fan 40 is driven, air in the cabin is flown into the battery case 20 through the air intake duct 31.

A first partition plate 21 a and a second partition plate 21b that are connected to the connection opening 20a are provided between an upper surface of the battery 10 and an upper surface of the battery case 20. The first partition plate 21a is positioned on a border between the first cell block 10A and the second cell block 10B in a view from the direction Z. Besides, the second partition plate 21b is positioned on a border between the first cell block 10A and the third cell block 10C when viewed in the direction Z.

The air from the air intake duct 31 passes through the connection opening 20a, and reaches a space S1 that is formed above the first cell block 10A. The space S1 is sandwiched between the first partition plate 21a and the second partition plate 21 b. The air flown to the space S1 then flows downward while passing through the first cell block 10A. Concretely, air flows through spaces that are formed between cell modules 11 that are adjacent to each other in the direction X.

It is to be noted herein that the provision of the first and second partition plates 21a and 21b prevents the air supplied from the air intake duct 31 from flowing toward the second or third cell block 10B, 10C, and causes the air to flow only into the first cell block 10A. Due to this construction, the air from the air intake duct 31 directly contacts only the cell modules 11 that constitute the first cell block 10A.

Since air is caused to contact the cell modules 11 that constitute the first cell block 10A, heat exchange can be carried out between the cell modules 11 of the first cell block 10A and air. Concretely, in the case where the cell modules 11 constituting the first cell block 10A are heated due to the electrical charging or discharging, the temperature rise of the cell modules 11 can be restrained by causing the air for cooling to contact the cell modules 11. Besides, in the case where the cell modules 11 constituting the first cell block 10A are excessively cold, the temperature drop of the cell modules can be restrained by causing the air for heating to contact the cell modules 11. By maintaining the temperature of the cell modules 11 constituting the first cell block 10A within a specific temperature range in this manner, degradation of the input/output characteristic (a characteristic regarding the electric charging and discharging) of the cell modules 11 can be restrained.

The air having been subjected to the heat exchange with the cell modules 11 that constitute the first cell block 10A flows to a space S2 that is located below the first cell block 10A. A bottom surface of the battery 10 (which is underneath the cell modules 11) is located above a bottom surface of the battery case 20, so that the space S2 is formed between the two bottom surfaces.

A third partition plate 21 c and a fourth partition plate 21 d are disposed between the bottom surface of the battery 10 and the bottom surface of the battery case 20. The space S2 is sandwiched between the third partition plate 21c and the fourth partition plate 21d. The third partition plate 21c is disposed in the same plane as the side surface of the battery 10 which is positioned on one of the two ends of the battery 10 in the direction X. Besides, the fourth partition plate 21d is disposed in the same plane as the side surface of the battery 10 which is positioned on the other end of the battery 10 in the direction X.

The air flown to the space S2 changes its flowing direction at the bottom surface of the battery case 20, and then flows toward the second and third cell blocks 10B and 10C. That is, the air having flown into the space S2 from the first cell block 10A is divided into air that flows toward the second cell block 10B and air that flows toward the third cell block 10C.

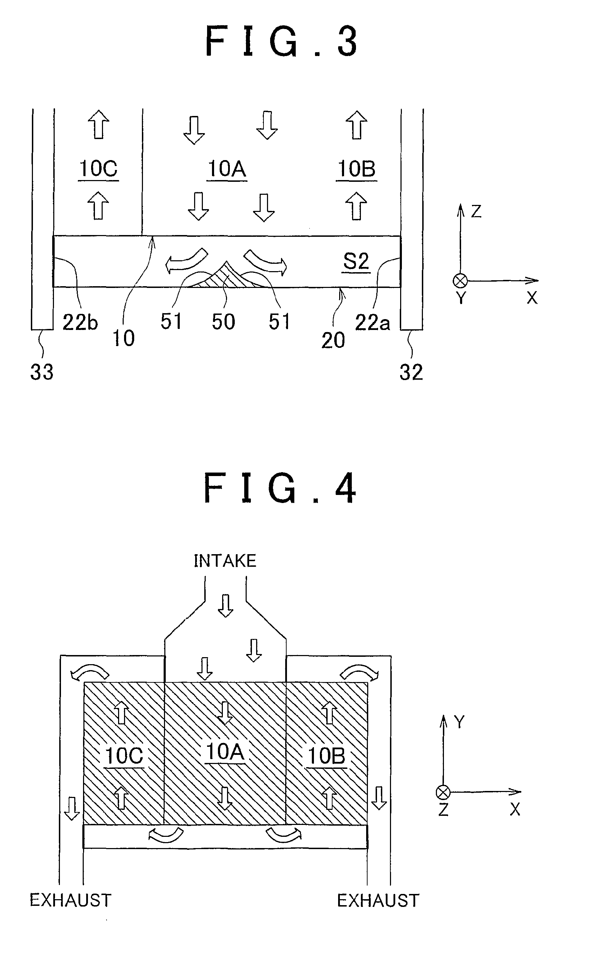

Although in this embodiment the bottom surface of the battery case 20 is formed by a flat surface, the bottom surface of the battery case 20 may also be provided with a guide surface for making the air to be guided from the first cell block 10A toward the second cell block 10B and toward the third cell block 10C. For example, as shown in FIG. 3, the bottom surface of the battery case 20 may be provided with a protruded portion 50 that has two angled surfaces (guide surfaces) 51. Incidentally, blank arrows in FIG. 3 show the flowing directions of air. Besides, the angled surfaces 51 may be formed by flat surfaces, or may also be formed by curved surfaces.

The air directed toward the second cell block 10B flows upward while passing through the second cell block 10B. Concretely, air flows through the spaces that are formed between cell modules 11 of the second cell block 10B which are adjacent to each other in the direction X. Likewise, the air directed toward the third cell block 10C flows upward while passing through the third cell block 10C. Concretely, air flows through the spaces that are formed between cell modules 11 of the third cell block 10C which are adjacent to each other in the direction X. It is to be noted that as air passes through the second cell block 10B or the third cell block 10C, heat exchange is performed between the air and the cell modules 11 that constitute the second or third cell block 10B or 10C. Besides, the flowing direction of the air that passes through the second or third cell block 10B or 10C is opposite the flowing direction of the air that passes through the first cell block 10A.

The air having been subjected to the heat exchange with the second cell block 10B flows to a space S3 that is located above the second cell block 10B. Then, the air having reached the space S3 changes (reverses) its flowing direction at the upper surface of the battery case 20, and then flows downward (toward a connection opening 20b described below) within a space that is formed between the second cell block 10B and the side surface (in a Y-Z plane) of the battery case 20. During this passage, the air is subjected to the heat exchange with a region of the second cell block 10B which faces the side surface (in the Y-Z plane) of the battery case 20. It is to be noted herein that one of the end plates 13 (see FIG. 1) is positioned in a region of the second cell block 10B which faces the side surface of the battery case 20.

A connection opening 20b is formed on the bottom surface of the battery case 20. An end of a first exhaust duct 32 is connected to the connection opening 20b. Due to this construction, the air having been subjected to the heat exchange with the side surface of the second cell block 10B passes through the connection opening 20b, and is guided to the first exhaust duct 32. An exhaust opening (not shown) formed on another end of the first exhaust duct 32 is located in an external surface of the vehicle. Therefore, the air having entered the first exhaust duct 32 via the connecting opening 20b is let out of the vehicle (into the atmosphere).

On the other hand, the air having been subjected to the heat exchange with the third cell block 10C moves to a space S4 that is located above the third cell block 10C. Then, the air having reached the space S4 changes (reverses) its flowing direction at the upper surface of the battery case 20, and then flows downward (toward a connection opening 20c described below) within a space that is formed between the third cell block 10C and the side surface (in a Y-Z plane) of the battery case 20. During this passage, the air is subjected to the heat exchange with a region of the third cell block 10C which faces the side surface (in the Y-Z plane) of the battery case 20. It is to be noted herein that one of the end plates 13 (see FIG. 1) is positioned in a region in the third cell block 10C which faces the side surface of the battery case 20.

A connection opening 20c is formed on the bottom surface of the battery case 20. An end of a second exhaust duct 33 is connected to the connection opening 20c. Due to this construction, the air having been subjected to the heat exchange with the side surface of the third cell block 10C passes through the connection opening 20c, and is guided to the second exhaust duct 33. An exhaust opening (not shown) formed on another end of the second exhaust duct 33 is located in an external surface of the vehicle. Therefore, the air having entered the second exhaust duct 33 via the connecting opening 20c is let out of the vehicle (into the atmosphere).

Incidentally, although in this embodiment, the first and second exhaust ducts 32 and 33 have their exhaust openings at locations that are different from each other, this construction is not restrictive. For example, the first and second exhaust ducts 32 and 33 may be connected to each other, and air in the two exhaust ducts may be discharged via one exhaust opening.

In a construction in which a plurality of cell modules 11 are arranged in the direction X as in the battery 10 of this embodiment, the cell module 11 positioned at a center in the direction X (the first cell block 10A) and the cell modules 11 positioned at two opposite ends in the direction X may sometimes differ from each other in the heat dissipation characteristic. Specifically, the cell modules 11 positioned in end portions of the battery 10 (which constitute the second and third cell blocks 10B and 10C) easily release heat that is generated by the cell modules 11 to the outside, whereas the cell modules 11 positioned in a central portion of the battery 10 (which constitute the first cell block 10A) cannot easily release heat generated by the cell modules 11 to the outside. Therefore, the temperature of the cell modules 11 located in a central portion of the battery 10 (which constitute the first cell block 10A) may become higher than the temperature of the cell modules 11 located in the two end portions of the battery 10 (which constitute the second and third cell blocks 10B and 10C).

In the structure of the embodiment, cooling air first contacts the first cell block 10A that is located in a central portion of the battery 10. Therefore, the cell modules 11 that constitute the first cell block 10A can be efficiently cooled.

The air having been subjected to the heat exchange with the first cell block 10A is guided so as to contact the second and third cell blocks 10B and 10C that are located at the two end sides of the first cell block 10A in the direction X. Since the second and third cell blocks 10B and 10C have higher heat dissipation characteristic than the first cell block 10A, the air having been subjected to the heat exchange with the first cell block 10A is sufficient to cool the second and third cell blocks 10B and 10C when contacting the cell blocks.

Furthermore, in this embodiment, the air having been subjected to the heat exchange with the second cell block 10B (or the third cell block 10C) is guided to flow along the side surface of the second cell block 10B (or the third cell block 10C), so that heat exchange occurs between the air and the side surface. Since the side surface of the second cell block 10B has the highest heat dissipation characteristic, sufficient cooling performance can be obtained although the air having been subjected to the heat exchange in the second cell block 10B is caused to contact the side surface.

By guiding the air to the cell blocks 10A to 10C as described above, the temperature variation can be restrained with respect to all the cell modules 11 that constitute the battery 10. If the temperature variation among the cell modules 11 can be restrained, efficient charging and discharging of all the cell modules 11 that constitute the battery 10 may be possible.

It is to be noted herein that if temperature variation occurs among the cell modules 11, variation also occurs in the input/output characteristic among the cell modules 11, and therefore, a control over the charging/discharging of the battery 10 with reference to a cell module 11 whose input/output characteristic has been the most degraded may be required. On the other hand, if the temperature variation among the cell modules 11 is restrained and therefore the variation in the input/output characteristic among the cell modules 11 is restrained as the present embodiment, efficient charging and discharging of the battery 10 may become possible.

Incidentally, although in the embodiment, the fan 40 is provided in the air intake duct 31, this construction is not restrictive, but it suffices that the foregoing flow of air can be generated within the battery case 20. Concretely, the exhaust ducts 32, 33 can be provided with a fan 40.

Besides, although in the forgoing embodiment, air is supplied from the above the battery 10, this is not restrictive. That is, it suffices that after air from the air intake duct is first caused to contact the first cell block 10A, the air can be caused to contact the second and third cell blocks 10B, 10C.

Concretely, the construction shown in FIG. 2 may be inverted upside drown. In the inverted construction, air is supplied from below the battery 10, and flows upward while passing through the first cell block 10A. Then, after reaching the top of the first cell block 10A, the air flows toward the second and third cell blocks 10B and 10C, and then flows downward while passing through the cell blocks 10B and 10C. After passing through the cell blocks 10B and 10C, the air changes its flowing direction, and flows upward along the side surfaces of the cell blocks 10B and 10C, and then is guided to the exhaust ducts.

Besides, adopting a construction as shown in FIG. 4, in which air is supplied to the first cell block 10A from the side of the second side surfaces 11 b of the cell modules 11 (see FIG. 1), into the present embodiment is also possible. FIG. 4 is a plan view of the battery 10, in which directions of airflow are shown by blank arrows. In the construction shown in FIG. 4, too, air from the air intake duct passes through the first cell block 10A, and then passes through the second and third cell blocks 10B and 10C. This construction is also able to achieve substantially the same effects as the construction of the foregoing embodiment.

Besides, although in the foregoing embodiment, the air passing through each cell block 10A to 10C is caused to flow in the direction Z (the upward direction or the downward direction), this construction is not restrictive. For example, in the case where the flowing direction of the air passing through the first cell block 10A is the direction X, the flowing direction of the air passing through the second cell block 10B may be the direction Y. This flow of air can be achieved by, for example, appropriately setting the positions, shapes and the like of partition plates disposed in the battery case 20.

Although in the foregoing embodiment, the cell modules 11 that constitute the battery 10 are divided into three cell blocks 10A, 10B and 10C, this construction is not restrictive, but the number of cell blocks in the battery 10 can be set as appropriate. Concretely, adopting an arrangement in which, of a plurality of cell modules 11 that constitute the battery 10, at least one cell module 11 positioned at the center in the direction X is provided as a first cell block, and a plurality of cell blocks are disposed on two opposite sides of the first cell block in the direction X, is possible. It is to be noted herein that the numbers of cell blocks disposed on the two opposite sides of the first cell block in the direction X may be equal to each other, or may also be different from each other. In such a case, too, it suffices that the flowing direction of air within the battery case is changed from one cell block to another so that, in two cell blocks that are adjacent to each other in the direction X, air is flown therethrough in mutually different directions (e.g., the upward direction and the downward direction).

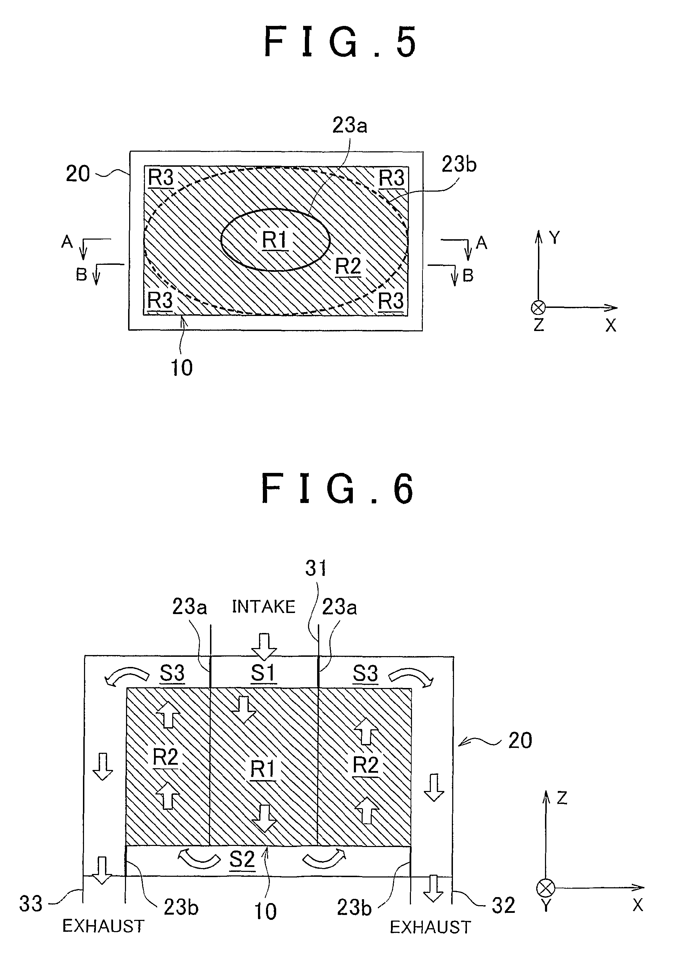

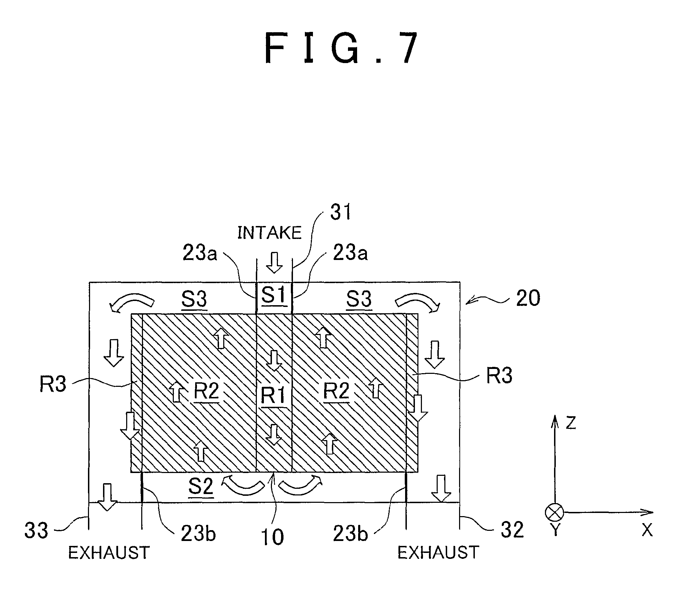

A temperature adjustment structure according to a second embodiment of the invention will be described with reference to FIGS. 5 to 7. FIG. 5 is a plan view showing a construction of the temperature adjustment structure of this embodiment. FIG. 6 is a sectional view taken on line A-A in FIG. 5, and FIG. 7 is a sectional view taken on line B-B in FIG. 5. Incidentally, the members that perform the same functions as those members described above in conjunction with first embodiment are represented by the same reference characters in the drawings, and detailed descriptions thereof are omitted below. Differences of the second embodiment from the first embodiment will mainly be described below.

A first partition plate 23a is disposed between an upper surface of the battery case 20 and an upper surface of the battery 10. An end (i.e., end edge) of an air intake duct 31 is connected to the first partition plate 23a. The first partition plate 23a has an elliptical shape when viewed in a vertical direction (see FIG. 5). The air taken into the air intake duct 31 reaches a space S1 that is surrounded by the first partition plate 23a.

The air having been guided to the space S1 flows downward while passing through a region R1 in the battery 10 which corresponds to the space S1. The region R1 herein is a region that becomes superimposed on the space S1 when the battery 10 is viewed in the vertical direction. As in the first embodiment, air flows through spaces that are formed between every two cell modules 11 that are adjacent to each other in the direction X. However, the second embodiment has a construction in which, in each of these spaces between the cell modules 11, only a portion of the space that is within the region R1 allows air to pass.

Concretely, spacers (some of spacers) disposed between adjacent cell modules 11 allow air to flow through spaces therebetween that correspond to the region R1. These spacers extend from an upper end surface to a lower end surface of the cell modules 11. The border lines between the regions R1 and R2 shown in FIG. 6 and FIG. 7 show these spacers.

As air passes through the region R1 in the battery 10, heat exchange is performed between the air and the cell modules 11 that are within the region R1. After being subjected to the heat exchange in the region R1 of the battery 10, the air flows to a space S2 that is formed below the battery 10. A second partition plate 23b is disposed between a lower surface of the battery case 20 and a lower surface of the battery 10 so that a space S2 is formed by the second partition plate 23b. The second partition plate 23b has an elliptical shape when viewed in the vertical direction (see FIG. 5).

After reaching the space S2, the air changes its flowing direction at a bottom surface of the battery case 20, and flows upward while passing through the region R2 in the battery 10. The region R2 is a region sandwiched between the first partition plate 23a and the second partition plate 23b when the battery 10 is viewed in the vertical direction. Besides, air passing through the region R2 means the air, which flows through spaces that are within the region R2, among the spaces that are formed between every two adjacent cell modules 11. Therefore, heat exchange occurs between air and the cell modules 11 that are within the region R2.

It is to be noted herein that spacers (some of spacers) provided between adjacent cell modules 11 allow air to flow through spaces therebetween that correspond to the region R2. These spacers extend from the upper end surface to the lower end surface of the cell modules 11. The border lines between the regions R2 and R3 shown in FIG. 7 show these spacers.

The air having been subjected to the heat exchange in the region R2 of the battery 10 flows to a space S3 that is formed above the battery 10. Then, after reaching the space S3, the air changes its flowing direction at the upper surface of the battery case 20, and flows downward while passing through regions R3 in the battery 10 that are other than the regions R1 and R2.

The regions R3 are located between the second partition plate 23b and an external edge of the battery 10 when the battery 10 is viewed in the vertical direction. Besides, air passing through the regions R3 means the air, which flows through spaces within the region R3, among the spaces that are formed between adjacent cell modules 11, or that air moves along an external surface of the battery 10. Therefore, heat exchange occurs between air and the cell modules 11 that are within the regions R3. The air having been subjected to the heat exchange flows through an exhaust duct 32 or another exhaust duct 33.

In this embodiment, the regions into which air is sequentially introduced so as to contact cell modules 11 as described above are divided according to the position in an X-Y plane. Incidentally, in the first embodiment, the regions (the cell blocks 10A to 10C) into which air is sequentially introduced so as to contact cell modules 11 are divided according to the positions of the cell modules 11 in the direction X.

According to this embodiment, the state of air that is caused to contact cell modules 11 is made different according to the positions of the cell modules 11 in the direction X in such a manner that the variation in temperature among the cell modules 11 that constitute the battery 10 can be restrained. The state of air herein refers to the state of air being subjected or not being subjected to heat exchange with cell modules 11.

Besides, in the embodiment, the state of air that is caused to contact cell modules 11 can be made different according to the position in the cell modules 11 (the position in the direction Y). Concretely, in each cell module 11, a portion from which heat does not readily dissipate is caused to have contact with air that comes directly from the air intake duct, and a portion of the cell module 11 from which heat readily dissipates is caused to have contact with the air that has been subjected to heat exchange. Therefore, the temperature variation within each cell module 11 can be restrained. In particular, in the embodiment, since a plurality of electric cells are juxtaposed in the direction Y within each cell module 11, the temperature variation among the electric cells of each cell module 11 can be restrained.

Incidentally, although in the embodiment, the first and second partition plates 23a and 23b have an elliptical shape as shown in FIG. 5, this configuration is not restrictive, but the shapes of the partition plates 23a and 23b can be set as appropriate on the basis of the temperature distribution in an X-Y plane in the battery 10. That is, it suffices that in the X-Y plane in the battery 10, regions having different heat dissipation characteristics (the regions R1 to R3 in the embodiment) are specifically determined beforehand, and that partition plates 23a and 23b are disposed in accordance with the regions. Besides, it also suffices that the positions of the spacers disposed between the cell modules 11 are determined according to the positions of the partition plates 23a and 23b.

Besides, although in the embodiment, the battery 10 is divided into three regions R1 to R3, this is not restrictive, but the battery 10 may also be divided into four or more regions. In such constructions, too, it suffices that air directly from the air intake duct is caused to contact the region that has the lowest heat dissipation characteristic in the X-Y plane and the air having been subjected to the heat exchange is caused to contact the other regions. It suffices that the flowing direction of air in the battery 10 is changed and the flowing directions of air in regions that are adjacent to each other in the X-Y plane are made different from each other.

Although in this embodiment, the battery 10 is divided into a plurality of regions R1 to R3 in the X-Y plane taking into consideration the heat dissipation characteristic of the battery 10 itself, this is not restrictive.

For example, in the case where a heat source (an engine or the like) is disposed near the battery 10, the battery 10 may be divided into a plurality of regions by using as a reference a portion of the battery 10 that is the closest to the heat source. Specifically, air from the air intake duct may be guided to a region of the battery 10 which is the closest to the heat source, and the air having been subjected to the region that is the closest to the heat source may be caused to contact the other regions. As for the route via which air is moved, it suffices that as in the first and second embodiments, the flowing direction of air is changed within the battery case 20, and the flowing directions of air within regions that are adjacent to each other in the X-Y plane are made different from each other.

Besides, although in the first and second embodiments, air for adjusting temperature is supplied to the battery 10, this is not restrictive, but a gas other than air may also be used.

While the invention has been described with reference to example embodiments thereof, it is to be understood that the invention is not limited to the described embodiments or constructions.

## Claims

1. An electricity storage apparatus (10) in which a plurality of electricity storage elements (11) are each disposed side by side in a predetermined direction, and the electricity storage apparatus (10) comprising a temperature adjustment structure,
the electricity storage apparatus (10) comprising:
a first passageway (10A) that is provided in a first region (R1) in the plurality of electricity storage elements (11) and that causes a gas, that has flown into the electricity storage apparatus (10), for adjusting temperature to pass a space between the adjacent electricity storage elements (11) in the first region (R1), the adjacent electricity storage elements (11) being juxtaposed in the predetermined direction; and
a second passageway (10B, 10C) that is provided in a second region (R2) in the plurality of electricity storage elements (11) which is adjacent to the first region (R1), and that causes the gas having passed through the first region (R1) to pass, in a direction that is different from a flowing direction in the first region (R1), the space between the adjacent electricity storage elements (11) in the second region (R2), the adjacent electricity storage elements being juxtaposed in the predetermined direction,
**characterized in that** the first region (R1) contains at least one of the electricity storage elements which is located in a central portion of the electricity storage apparatus in the predetermined direction,
wherein the second region (R2) contains at least two of the electricity storage elements (11) which are located in opposite sides of the first region (R1) in the predetermined direction, and
wherein the electricity storage apparatus is adapted such that the gas is first supplied into the first passageway (10A) in the electricity storage apparatus (10).

2. The electricity storage apparatus according to claim 1, wherein the first region (R1) has lower heat dissipation characteristic than the second region (R2).

3. The electricity storage apparatus (10) according to claim 1 or 2, wherein the flowing direction of the gas passing through the second region (R2) is opposite from the flowing direction of the gas passing through the first region (R1).

4. The electricity storage apparatus (10) according to any one of claims 1 to 3, wherein:
the first region (R1) is located in a central portion of the electricity storage apparatus (10) in a plane that extends in the predetermined direction along an upper surface of the electricity storage apparatus (10); and
the second region (R2) is located toward an outside edge side of the electricity storage apparatus (10) from the first region (R1) in the plane.

5. The electricity storage apparatus (10) according to any one of claims 1 to 3, wherein:
the first region (R1) is near a heat source; and
the second region (R2) is remoter from the heat source in a plane that extends in the predetermined direction along an upper surface of the electricity storage apparatus (10) than the first region (R1) is from the heat source.

6. The electricity storage apparatus (10) according to any one of claims 1 to 5, further comprising a third passageway (32, 33) that is provided in a third region (R3) in the electricity storage apparatus (10) which is adjacent to the second region (R2), and that causes the gas having passed through the second region (R2) to pass, in a direction that is different from the flowing direction of the gas within the second region (R2), through the third region (R3).

7. The electricity storage apparatus according to claim 6, wherein the third region (R3) has higher heat dissipation characteristic than the first region (R1) and the second region (R2), and includes an external surface of the electricity storage apparatus (10).

8. The electricity storage apparatus (10) according to claim 6 or 7, wherein the flowing direction of the gas passing through the third region (R3) is the same as the flowing direction of the gas passing through the first region (R1).

9. The electricity storage apparatus (10) according to any one of claims 6 to 8, further comprising a partition (23b) plate that is located on an outer surface of the electricity storage apparatus (10) and that separates the second region (R2) and the third region (R3).

10. The electricity storage apparatus (10) according to any one of claims 6 to 9, further comprising a first spacer that extends from an upper end surface to a lower end surface of the electricity storage apparatus and that separates the second region and the third region.

11. The electricity storage apparatus according to any one of claims 1 to 10, further comprising a partition plate (21a, 21b, 23a) that is located on an outer surface of the electricity storage apparatus (10) and that separates the first region (R1) and the second region (R2).

12. The electricity storage apparatus (10) according to any one of claims 1 to 11, further comprising a second spacer that extends from an upper end surface to a lower end surface of the electricity storage apparatus and that separates the first region (R1) and the second region (R2).

## Patentansprüche

1. Elektrizitätsspeichervorrichtung (10), in der eine Vielzahl von Elektrizitätsspeicherelementen (11) jeweils in einer vorbestimmten Richtung Seite an Seite angeordnet sind, und wobei die Elektrizitätsspeichervorrichtung (10) eine Temperatureinstellstruktur aufweist,
wobei die Elektrizitätsspeichervorrichtung (10) Folgendes aufweist:
einen ersten Durchgang (10A), der in einem ersten Bereich (R1) in der Vielzahl von Elektrizitätsspeicherelementen (11) vorgesehen ist und der ein Gas, das in die Elektrizitätsspeichervorrichtung (10) eingeströmt ist, zum Einstellen der Temperatur dazu bringt, einen Raum zwischen den benachbarten Elektrizitätsspeicherelementen (11) in dem ersten Bereich (R1) zu passieren, wobei die benachbarten Elektrizitätsspeicherelemente (11) in der vorbestimmten Richtung nebeneinandergestellt sind; und
einen zweiten Durchgang (10B, 10C), der in einem zweiten Bereich (R2) in der Vielzahl von Elektrizitätsspeicherelementen (11), der dem ersten Bereich (R1) benachbart ist, vorgesehen ist, und der das Gas, das durch den ersten Bereich (R1) hindurch passiert ist, dazu bringt, den Raum zwischen den benachbarten Elektrizitätsspeicherelementen (11) in dem zweiten Bereich (R2) in einer Richtung, die sich von einer Strömungsrichtung des ersten Bereichs (R1) unterscheidet, zu passieren, wobei die benachbarten Elektrizitätsspeicherelemente in der vorbestimmten Richtung nebeneinander geordnet sind,
**dadurch gekennzeichnet, dass** der erste Bereich (R1) zumindest eines der Elektrizitätsspeicherelemente enthält, das sich in der vorbestimmten Richtung in einem zentralen Abschnitt der Elektrizitätsspeichervorrichtung befindet,
wobei der zweite Bereich (R2) zumindest zwei der Elektrizitätsspeicherelemente (11) beinhaltet, die sich in der vorbestimmten Richtung an entgegengesetzten Seiten des ersten Bereichs (R1) befinden, und
wobei die Elektrizitätsspeichervorrichtung derart angepasst ist, dass das Gas zuerst in den ersten Durchgang (10A) in der Elektrizitätsspeichervorrichtung (10) zugeführt wird.

2. Elektrizitätsspeichervorrichtung gemäß Anspruch 1, wobei der erste Bereich (R1) eine geringere Wärmeableiteigenschaft als der zweite Bereich (R2) hat.

3. Elektrizitätsspeichervorrichtung (10) gemäß Anspruch 1 oder 2, wobei die Strömungsrichtung des durch den zweiten Bereich (R2) hindurch passierenden Gases der Strömungsrichtung des Gases entgegengesetzt ist, das durch den ersten Bereich (R1) hindurch passiert.

4. Elektrizitätsspeichervorrichtung (10) gemäß einem der Ansprüche 1 bis 3, wobei
der erste Bereich (R1) sich in einem zentralen Abschnitt der Elektrizitätsspeichervorrichtung (10) in einer Ebene befindet, die sich in der vorbestimmten Richtung entlang einer oberen Fläche der Elektrizitätsspeichervorrichtung (10) erstreckt, und
der zweite Bereich (R2) sich von dem ersten Bereich (R1) in Richtung einer Außenkantenseite der Elektrizitätsspeichervorrichtung (10) in der Ebene erstreckt.

5. Elektrizitätsspeichervorrichtung (10) gemäß einem der Ansprüche 1 bis 3, wobei
der erste Bereich (R1) einer Wärmequelle nahe ist; und
der zweite Bereich (R2) von der Wärmequelle in einer Ebene, die sich in der vorbestimmten Richtung entlang einer oberen Fläche der Elektrizitätsspeichervorrichtung (10) erstreckt, weiter weg ist, als es der erste Bereich (R1) von der Wärmequelle ist.

6. Elektrizitätsspeichervorrichtung (10) gemäß einem der Ansprüche 1 bis 5, ferner mit einem dritten Durchgang (32, 33), der in einem dritten Bereich (R3) in der Elektrizitätsspeichervorrichtung (10), der dem zweiten Bereich (R2) benachbart ist, vorgesehen ist, und der das Gas, das durch den zweiten Bereich (R2) hindurch passiert ist, dazu bringt, in einer Richtung, die von der Strömungsrichtung des Gases in dem zweiten Bereich (R2) verschieden ist, durch den dritten Bereich (R3) hindurch zu passieren.

7. Elektrizitätsspeichervorrichtung gemäß Anspruch 6, wobei der dritte Bereich (R3) eine höhere Wärmeableiteigenschaft als der erste Bereich (R1) und der zweite Bereich (R2) hat, und eine Außenfläche der Elektrizitätsspeichervorrichtung (10) beinhaltet.

8. Elektrizitätsspeichervorrichtung (10) gemäß Anspruch 6 oder 7, wobei die Strömungsrichtung des durch den dritten Bereich (R3) hindurch passierenden Gases gleich wie die Strömungsrichtung des durch den ersten Bereich (R1) hindurch passierenden Gases ist.

9. Elektrizitätsspeichervorrichtung (10) gemäß einem der Ansprüche 6 bis 8, ferner mit einer Trennplatte (23b), die sich an einer Außenfläche der Elektrizitätsspeichervorrichtung (10) befindet und den zweiten Bereich (R2) und den dritten Bereich (R3) trennt.

10. Elektrizitätsspeichervorrichtung (10) gemäß einem der Ansprüche 6 bis 9, ferner mit einem ersten Abstandshalter, der sich von einer oberen Endfläche zu einer unteren Endfläche der Elektrizitätsspeichervorrichtung erstreckt und der den zweiten Bereich und den dritten Bereich trennt.

11. Elektrizitätsspeichervorrichtung gemäß einem der Ansprüche 1 bis 10, ferner mit einer Trennplatte (21a, 21b, 23a), die sich an einer Außenfläche der Elektrizitätsspeichervorrichtung (10) befindet und den ersten Bereich (R1) und den zweiten Bereich (R2) trennt.

12. Elektrizitätsspeichervorrichtung (10) gemäß einem der Ansprüche 1 bis 11, ferner mit einem zweiten Abstandshalter, der sich von einer oberen Endfläche zu einer unteren Endfläche der Elektrizitätsspeichervorrichtung erstreckt und der den ersten Bereich (R1) und den zweiten Bereich (R2) trennt.

## Revendications

1. Appareil de stockage d'électricité (10) dans lequel une pluralité d'éléments de stockage d'électricité (11) sont disposés chacun côte à côte dans une direction prédéterminée, et l'appareil de stockage d'électricité (10) comprenant une structure de réglage de température,
l'appareil de stockage d'électricité (10) comprenant :
un premier passage (10A) qui est prévu dans une première zone (R1) dans la pluralité d'éléments de stockage d'électricité (11) et qui amène un gaz, qui a circulé dans l'appareil de stockage d'électricité (10), pour régler la température à traverser un espace entre les éléments de stockage d'électricité (11) adjacents dans la première zone (R1), les éléments de stockage d'électricité (11) adjacents étant juxtaposés dans la direction prédéterminée ; et
un deuxième passage (10B, 10C) qui est prévu dans une deuxième zone (R2) dans la pluralité d'éléments de stockage d'électricité (11) qui est adjacente à la première zone (R1), et qui amène le gaz ayant traversé la première zone (R1) à traverser, dans une direction qui est différente d'une direction d'écoulement dans la première zone (R1), l'espace entre les éléments de stockage d'électricité (11) adjacents dans la deuxième zone (R2), les éléments de stockage d'électricité adjacents étant juxtaposés dans la direction prédéterminée,
**caractérisé en ce que** la première zone (R1) contient au moins l'un des éléments de stockage d'électricité qui est situé dans une partie centrale de l'appareil de stockage d'électricité dans la direction prédéterminée,
dans lequel la deuxième zone (R2) contient au moins deux des éléments de stockage d'électricité (11) qui sont situés dans des côtés opposés de la première zone (R1) dans la direction prédéterminée, et
dans lequel le dispositif de stockage d'électricité est adapté de sorte que le gaz est d'abord fourni dans le premier passage (10A) dans l'appareil de stockage d'électricité (10).

2. Appareil de stockage d'électricité selon la revendication 1, dans lequel la première zone (R1) a une caractéristique de dissipation de chaleur inférieure à celle de la deuxième zone (R2).

3. Appareil de stockage d'électricité (10) selon la revendication 1 ou 2, dans lequel la direction d'écoulement du gaz traversant la deuxième zone (R2) est opposée à la direction d'écoulement du gaz traversant la première zone (R1).

4. Appareil de stockage d'électricité (10) selon l'une quelconque des revendications 1 à 3, dans lequel :
la première zone (R1) est située dans une partie centrale de l'appareil de stockage d'électricité (10) dans un plan qui s'étend dans la direction prédéterminée le long d'une surface supérieure de l'appareil de stockage d'électricité (10) ; et
la deuxième zone (R2) est située vers un côté de bord externe de l'appareil de stockage d'électricité (10) à partir de la première zone (R1) dans le plan.

5. Appareil de stockage d'électricité (10) selon l'une quelconque des revendications 1 à 3, dans lequel :
la première zone (R1) est proche d'une source de chaleur ; et
la deuxième zone (R2) est plus éloignée de la source de chaleur dans un plan qui s'étend dans la direction prédéterminée le long d'une surface supérieure de l'appareil de stockage d'électricité (10) que la première zone (R1) l'est de la source de chaleur.

6. Appareil de stockage d'électricité (10) selon l'une quelconque des revendications 1 à 5, comprenant en outre un troisième passage (32, 33) qui est prévu dans une troisième zone (R3) dans l'appareil de stockage d'électricité (10) qui est adjacente à la deuxième zone (R2), et qui amène le gaz ayant traversé la deuxième zone (R2) à traverser, dans une direction qui est différente de la direction d'écoulement du gaz à l'intérieur de la deuxième zone (R2), la troisième zone (R3).

7. Appareil de stockage d'électricité selon la revendication 6, dans lequel la troisième zone (R3) a une caractéristique de dissipation de chaleur supérieure à celles de la première zone (R1) et de la deuxième zone (R2), et comporte une surface externe de l'appareil de stockage d'électricité (10).

8. Appareil de stockage d'électricité (10) selon la revendication 6 ou 7, dans lequel la direction d'écoulement du gaz traversant la troisième zone (R3) est la même que la direction d'écoulement du gaz traversant la première zone (R1).

9. Appareil de stockage d'électricité (10) selon l'une quelconque des revendications 6 à 8, comprenant en outre une plaque de séparation (23b) qui est située sur une surface externe de l'appareil de stockage d'électricité (10) et qui sépare la deuxième zone (R2) et la troisième zone (R3).

10. Appareil de stockage d'électricité (10) selon l'une quelconque des revendications 6 à 9, comprenant en outre une première entretoise qui s'étend à partir d'une surface d'extrémité supérieure à une surface d'extrémité inférieure de l'appareil de stockage d'électricité et qui sépare la deuxième zone et la troisième zone.

11. Appareil de stockage d'électricité selon l'une quelconque des revendications 1 à 10, comprenant en outre une plaque de séparation (21a, 21b, 23a) qui est située sur une surface externe de l'appareil de stockage d'électricité (10) et qui sépare la première zone (R1) et la deuxième zone (R2).

12. Appareil de stockage d'électricité (10) selon l'une quelconque des revendications 1 à 11, comprenant en outre une deuxième entretoise qui s'étend à partir d'une surface d'extrémité supérieure à une surface d'extrémité inférieure de l'appareil de stockage d'électricité et qui sépare la première zone (R1) et la deuxième zone (R2).
